# EUROPÄISCHE PATENTSCHRIFT

(11) **EP 3 045 409 B1**
(45) Veröffentlichungstag und Bekanntmachung des Hinweises auf die Patenterteilung: **06.03.2019**
(21) Anmeldenummer: 16150848.6
(22) Anmeldetag: 12.01.2016
(51) Int. Cl.: B65G 47/248

(54) **VORRICHTUNG ZUM WENDEN VON SERIELL ZUGEFÜHRTEM STÜCKGUT**
DEVICE FOR TURNING SERIALLY FED PIECE GOODS
DISPOSITIF DE RETOURNEMENT DE MARCHANDISES AU DETAIL TRANSPORTEES EN SERIE

(30) Priorität: 13.01.2015 DE 202015100132 U
(43) Veröffentlichungstag der Anmeldung: 20.07.2016
(73) Patentinhaber: Trans-Tech Weisser GmbH, 86438 Kissing (DE)
(72) Erfinder: MEISETSCHLÄGER, Andreas, 86510 Ried (DE); LUTZ, Mario, 86510 Ried (DE)
(74) Vertreter: Charrier Rapp & Liebau

(56) Entgegenhaltungen:
- EP-A1- 0 390 256
- DE-A1-102010 027 734
- US-A- 3 823 803
- US-A- 4 458 801
- US-A1- 2008 203 109

## Beschreibung

Die Erfindung betrifft eine Vorrichtung zum Wenden von seriell zugeführtem Stückgut nach dem Oberbegriff des Anspruchs 1.
Eine gattungsgemäße Wendevorrichtung ist aus der EP 0 070 195 B1 bekannt. Diese Wendevorrichtung umfasst einen Führungsblock, der aus mehreren, aneinander liegenden oder im Abstand zueinander angeordneten Platten zusammengesetzt ist. Jede Platte weist dabei eine Ausnehmung auf, welche zumindest im Wesentlichen der Form der Stückgüter angepasst ist, welche mit der Wendevorrichtung gewendet werden sollen. Die Platten sind dabei so zueinander angeordnet, dass sich ein Führungskanal in dem durch die Platten gebildeten Führungsblock ausbildet, wobei die in einer Durchlaufrichtung des Stückguts hintereinander angeordneten Platten und die darin ausgebildeten Ausnehmungen so ausgerichtet sind, dass sich entlang einer Bewegungsbahn der zu wendenden Stückgüter Hindernisse in dem Führungskanal ausbilden. Diese Hindernisse drehen ein durch den Führungskanal geführtes Stückgut jeweils geringfügig um eine durch das Stückgut durchgehende und zu seiner Bewegungsrichtung parallelen Achse, so dass das Stückgut beim Durchlauf durch den Führungskanal von einer ersten Lage am Eingang des Führungskanals in eine zweite Lage am Ende des Führungskanals gedreht wird.

Eine weitere gattungsgemäße Vorrichtung gemäß dem Oberbegriff des Anspruchs 1 ist in der EP 0390256 A1 beschrieben.
Nachteilig bei diesen bekannten Wendevorrichtungen ist die Anpassung der Ausnehmungen in jeder Platte an die Form und die Größe der mit der Wendevorrichtung zu wendenden Stückgüter. Dadurch bedingt können mit einer Wendevorrichtung immer nur solche Stückgüter verarbeitet werden, welche in ihrer Umrissform der Form und Größe der Ausnehmungen in den einzelnen Platten entsprechen. Für die Verarbeitung von Stückgütern mit einer anderen Größe oder einer anderen Umrissform ist die Herstellung einer entsprechend an die Form und Größe dieser anderen Stückgüter angepassten Wendevorrichtung erforderlich, d. h. für unterschiedliche Stückgüter in verschiedenen Größen oder Formen müssen verschiedene Wendevorrichtungen mit entsprechend angepassten Größen und Formen des Führungskanals bereit gestellt werden. Dies ist kostenaufwendig und verursacht zusätzlichen Aufwand für die Umrüstung einer Transportanlage für die Stückgüter, in der die Wendevorrichtung eingesetzt wird.

Aus der US 3823803 - B ist eine Vorrichtung zum Transportieren von Nüssen bekannt, die über zwei gegenüberliegende und von Distanzscheiben in einem vorgegebenen Abstand zueinander gehaltene Grundkörperteile verfügt, zwischen denen ein sich verzweigender Transportkanal verläuft, wobei die Distanzscheiben eine Anpassung des Abstands der Grundkörperteile an die Größe der Nüsse ermöglicht.

Hiervon ausgehend liegt der Erfindung die Aufgabe zugrunde, eine gattungsgemäße Wendevorrichtung so weiter zu bilden, dass mit ihr verschiedene Stückgüter mit unterschiedlichen Größen und Formen verarbeitet werden können.

Diese Aufgabe wird mit einer Vorrichtung zum Wenden von seriell zugefügtem Stückgut mit den Merkmalen des Anspruchs 1 gelöst. Bevorzugte Ausführungsformen dieser Vorrichtung sind in den abhängigen Ansprüchen aufgezeigt.

Die erfindungsgemäße Vorrichtung umfasst einen Führungsblock, in dem ein Führungskanal mit einer Eingangsöffnung und einer Ausgangsöffnung ausgeformt ist. Der Führungskanal in dem Führungsblock ist dabei so geformt, dass die Stückgüter, welche durch die Eingangsöffnung in den Führungskanal eingeführt und durch diesen bis zur Ausgangsöffnung durchgeführt werden, beim Durchlauf durch den Führungskanal von einer ersten Lage an der Eingangsöffnung in eine zweite Lage an der Ausgangsöffnung gedreht werden. Dies ist bspw. dadurch realisiert, dass in dem Führungskanal in Durchlaufrichtung von der Eingangsöffnung zur Ausgangsöffnung hintereinander angeordnete Hindernisse vorhanden sind, welche jeweils eine zweckmäßig infinitesimale Drehung der durchgeführten Stückgüter beim Durchlaufen durch den Führungskanal bewirken. Die Kraft, mit der die seriell dem Führungsblock zugeführten Stückgüter durch den Führungskanal in einer Durchlaufrichtung gefördert werden, wird durch den Staudruck der Stückgüter erzeugt, die beispielsweise mit einem Förderband dem Führungsblock seriell zugeführt werden. Gemäß der Erfindung besteht der Führungsblock dabei aus wenigstens zwei Blockteilen, welche gegeneinander verschiebbar sind. Dabei sind die Blockteile zweckmäßig in einer zumindest im Wesentlichen senkrecht zur Durchlaufrichtung stehenden Richtung gegeneinander verschiebbar ausgebildet.

Durch die Verschiebbarkeit der wenigstens zwei Blockteile des Führungsteils ist es möglich, die Größe und die Form der Eingangsöffnung und der Ausgangsöffnung sowie des dazwischen verlaufenden Führungskanals jeweils an die Größe und die Form der Stückgüter anzupassen, welche mit der Vorrichtung verarbeitet werden sollen. Zweckmäßig sind die Blockteile des Führungsblocks zwischen einer Minimalstellung und einer Maximalstellung kontinuierlich verschiebbar und in Zwischenstellungen zwischen der Minimal- und der Maximalstellung fixierbar. Dadurch können mit der erfindungsgemäßen Vorrichtung beliebige Stückgüter verarbeitet werden, welche eine Form und Größe aufweisen, die jeweils zwischen der Form und Größe der Eingangs- bzw. Ausgangsöffnung in der Minimalstellung und der Form und Größe der Eingangs- bzw. Ausgangsöffnung in der Maximalstellung liegen. Der Führungsblock kann dabei, wie in der aus dem eingangs beschriebenen Stand der Technik bekannten Wendevorrichtung, durch eine Mehrzahl von hintereinander angeordneten und mit einer Ausnehmung versehenen Platten zusammen gesetzt sein, wobei die Form der Ausnehmungen in den einzelnen Platten im Wesentlichen der Umrisslinie der kleinsten mit der Vorrichtung zu drehenden Stückgüter entspricht und die Ausnehmungen in jeder in Durchlaufrichtung der Stückgüter nachfolgenden Platte gegenüber der vorhergehenden Platte um einen (infinitesimalen) Winkel gedreht angeordnet sind, so dass die in Durchlaufrichtung hintereinander angeordneten Platten einen Führungskanal ausbilden, in dem die Ränder der Ausnehmungen Hindernisse für die durchgeführten Stückgüter bilden, welche beim Durchführen durch den Führungskanal zu einer sukzessiven Drehung der Stückgüter führen. Um den Widerstand beim Durchführen der Stückgüter durch den Führungskanal zu reduzieren, sind die Ränder der Ausnehmungen in den einzelnen Platten zweckmäßig abgerundet, so dass ein kantenfreier Führungskanal mit einer möglichst glatten Kanalwand in dem Führungsblock ausgebildet ist. Der auf diese Weise durch die Mehrzahl von hintereinander angeordneten Platten gebildete Führungsblock ist gemäß der Erfindung in zwei oder mehr Blockteile unterteilt, welche gegeneinander verschiebbar sind. Erfindungsgemäß erfolgt die Unterteilung des Führungsblocks in zwei oder mehr Blockteile erfolgt dabei bevorzugt entlang von Trennebenen, welche den Führungsblock in die Blockteile unterteilen, wobei diese Trennebenen durch den im Führungsblock ausgebildeten Führungskanal verlaufen.
Alternativ zu der Ausbildung des Führungsblocks durch eine Mehrzahl von hintereinander angeordneten Platten kann der Führungsblock auch durch zwei oder mehr jeweils einstückige Blockteile zusammengesetzt sein. In den einstückigen Blockteilen ist dann jeweils ein Teil des Führungskanals durch Ausbildung von zweckmäßig kantenfreien Ausnehmungen mit einer möglichst glatten Oberfläche ausgebildet. Durch das Zusammensetzen der einzelnen Blockteile zu einem Führungsblock bildet sich der Führungskanal aus den einzelnen Kanalteilen der Blockteile aus. Durch die Verschiebbarkeit der einzelnen Blockteile gegeneinander, ist die Größe und die Form des Führungskanals, einschließlich der Eingangs- und der Ausgangsöffnung, variabel und kann insbesondere zwischen der Minimalstellung und der Maximalstellung an die Größe und Form der zu verarbeitenden Stückgüter angepasst werden.

Zweckmäßig ist der Führungsblock aus wenigstens einem stationären Blockteil und einem oder mehreren beweglichen Blockteilen zusammengesetzt. Der stationäre Blockteil ist dabei bevorzugt an einem stationären Rahmenteil befestigt und der oder jeder bewegliche Blockteil ist gegenüber dem stationären Rahmenteil verschiebbar. Zweckmäßig ist dafür der oder jeder bewegliche Blockteil entlang von an dem stationären Rahmenteil angeordneten Führungselementen, beispielsweise Führungsschienen oder -stäben, verschiebbar.

Zum Verschieben des oder der beweglichen Blockteile gegenüber dem stationären Blockteil ist jeder bewegliche Blockteil zweckmäßig mit einem Antrieb gekoppelt. Bei dem Antrieb kann es sich beispielsweise um einen hydraulischen oder pneumatischen oder auch um einen motorischen Antrieb handeln. Bevorzugt ist ein motorischer Antrieb in Form eines Elektromotors, insbesondere eines Schrittmotors vorgesehen.

In einem Ausführungsbeispiel der Erfindung setzt sich der Führungsblock aus zwei Blockteilen zusammen, nämlich einem stationären Blockteil, der an einem stationären Rahmenteil befestigt ist, und einem beweglichen Blockteil, der gegenüber dem Rahmenteil entlang von Führungselementen in einer horizontalen und / oder einer vertikalen Richtung verschiebbar ist. Die horizontale bzw. vertikale Richtung steht dabei bevorzugt und zumindest im Wesentlichen senkrecht zur Durchlaufrichtung der durch den Führungskanal durchzuführenden Stückgüter.

In einem weiteren Ausführungsbeispiel setzt sich der Führungsblock aus einem stationären Blockteil und zwei beweglichen Blockteilen zusammen, wobei die beweglichen Blockteile gegenüber dem stationären Blockteil in einer vertikalen Richtung verschiebbar und die beiden beweglichen Blockteile gegeneinander in einer horizontalen Richtung verschiebbar sind. Durch die Verschiebbarkeit der beweglichen Blockteile einerseits gegenüber dem stationären Blockteil und andererseits gegenüber dem anderen beweglichen Blockteil kann der (mittlere) Durchmesser des Führungskanals an die Größe der zu verarbeitenden Stückgüter angepasst werden. Unter mittlerer Durchmesser wird dabei der entlang der Durchlaufrichtung (Transportrichtung der Stückgüter) gemittelte Durchmesser des Führungskanals verstanden. In diesem Ausführungsbeispiel ist der stationäre Blockteil zweckmäßig an einem stationären Rahmenteil befestigt und die beiden beweglichen Blockteile sind in einem beweglichen Rahmenteil angeordnet, welches gegenüber dem stationären Rahmenteil in einer vertikalen Richtung verschiebbar ist. Die beiden beweglichen Blockteile sind dabei in dem beweglichen Rahmenteil so angeordnet, dass sie gegeneinander entlang einer horizontalen Führung verschiebbar sind. Die Blockteile sind dabei jeweils zwischen einer Minimalstellung, in der sie sich berühren, und einer Maximalstellung, in der sie in einem vorgegebenen Maximalabstand zueinander stehen, kontinuierlich verschiebbar und bevorzugt in jeder Zwischenstellung arretierbar. Auf diese Weise kann die Größe und die Form des Führungskanals sowie der Eingangs- und der Ausgangsöffnung sowohl an die Höhe als auch an die Breite bzw. den Durchmesser der mit der Vorrichtung zu verarbeitenden Stückgüter angepasst werden.

Diese und weitere Vorteile der Erfindung ergeben sich aus den nachfolgend unter Bezugnahme auf die begleitenden Zeichnungen näher beschriebenen Ausführungsbeispielen. Die Zeichnungen zeigen:
- **Figur 1:**: Darstellung einer ersten Ausführungsform einer erfindungsgemäßen Vorrichtung zum Wenden von seriell zugeführtem Stückgut in einer perspektivischen Ansicht von vorne (Figur 1a), sowie einer Ansicht von vorne (Figur 1b) und einer einer Ansicht von hinten (Figur 1c), wobei die Vorrichtung jeweils in einer Maximalstellung eingestellt ist;
- **Figur 2:**: Darstellung der ersten Ausführungsform der erfindungsgemäßen Vorrichtung zum Wenden von seriell zugeführtem Stückgut in einer perspektivischen Ansicht von vorne (Figur 2a), sowie einer Ansicht von vorne (Figur 2b) und einer einer Ansicht von hinten (Figur 2c), wobei die Vorrichtung jeweils in einer Minimalstellung eingestellt ist;

- **Figur 3:**: Darstellung einer zweiten Ausführungsform einer erfindungsgemäßen Vorrichtung in einer perspektivischen Ansicht von vorne (Figur 3a), einer Ansicht von vorne (Figur 3b) und einer Ansicht von hinten (Figur 3c), wobei die Vorrichtung jeweils in einer mittleren Stellung eingestellt ist;
- **Figur 4:**: Darstellung der zweiten Ausführungsform der erfindungsgemäßen Vorrichtung in einer perspektivischen Ansicht von vorne (Figur 4a), einer Ansicht von vorne (Figur 4b) und einer Ansicht von hinten (Figur 4c), wobei die Vorrichtung jeweils in einer Minimalstellung eingestellt ist;
- **Figur 5:**: Darstellung der zweiten Ausführungsform der erfindungsgemäßen Vorrichtung in einer perspektivischen Ansicht von vorne (Figur 5a), einer Ansicht von vorne (Figur 5b) und einer Ansicht von hinten (Figur 5c), wobei die Vorrichtung jeweils in einer Maximalstellung eingestellt ist;
- **Figur 6:**: Darstellung einer Wendeeinrichtung zum Wenden von seriell zugeführtem Stückgut, welche sich aus einer Vorrichtung nach Figur 1, einer Vorrichtung nach Figur 3 und einer dazwischen angeordneten Transportstrecke zusammen setzt.

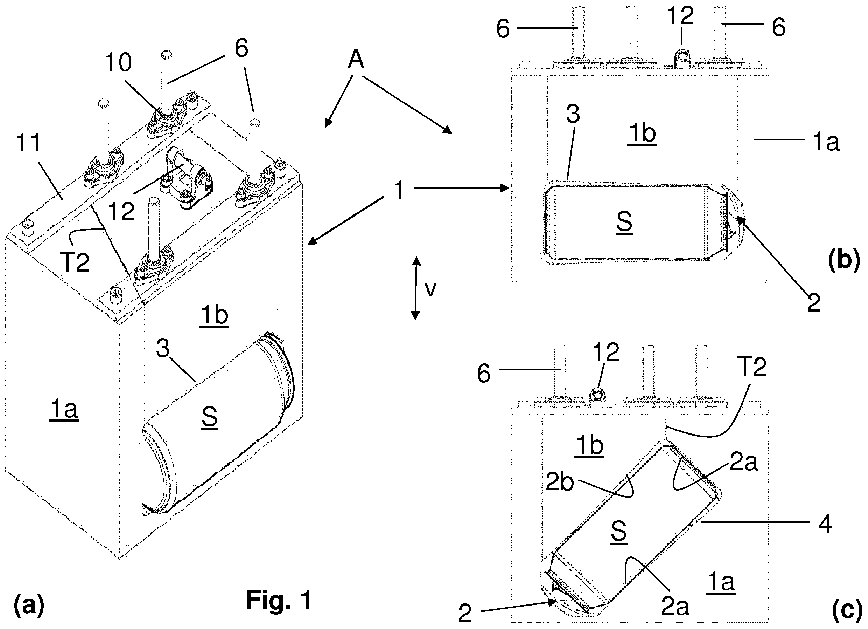

In Figur 1 ist eine erste Ausführungsform einer erfindungsgemäßen Vorrichtung A zum Wenden von seriell zugeführtem Stückgut gezeigt. Diese Ausführungsform der erfindungsgemäßen Vorrichtung dient zum Wenden von Stückgut S, beispielsweise von zylindrischen Dosen oder Gläsern oder quaderförmigen Verpackungen aus Pappe, um einen vorgegebenen Drehwinkel von 45°. Die Vorrichtung A umfasst hierfür einen Führungsblock 1, der sich aus einem ersten Blockteil 1a und einem zweiten Blockteil 1b zusammen setzt. Der Führungsblock 1 ist dabei längs einer Trennebene T2 in die beiden Blockteile 1a und 1b unterteilt. Die beiden Blockteile 1a, 1b sind zweckmäßig aus Kunststoff, beispielsweise aus POM oder PP und können jeweils einstückig ausgebildet und beispielsweise durch Spritzguss gefertigt oder durch eine Mehrzahl von hintereinander angeordneten Platten zusammengesetzt sein. Die Blockteile 1a, 1b können jedoch auch aus einem anderen Material, wie z.B. Metall oder Holz gefertigt sein.

In dem durch die beiden Blockteile 1a, 1b gebildeten Führungsblock 1 ist ein Führungskanal 2 mit einer Eingangsöffnung 3 (Figur 1a) und einer Ausgangsöffnung 4 (Figur 1b) ausgeformt, wobei die Lage der Eingangsöffnung 3 gegenüber der Lage der Ausgangsöffnung 4 in dem hier gezeigten Ausführungsbeispiel um 45° (bei Blick in Durchlaufrichtung in Uhrzeigerrichtung) gedreht ist. Der Führungskanal 2 ist einerseits von den Wandungen 2a einer Ausnehmung in dem stationären Blockteil 1a und andererseits von einer Wandung 2b des beweglichen Blockteils 1b begrenzt und weist zweckmäßig eine kantenfreie, glatte Oberfläche auf, welche so ausgeformt ist, dass ein durch den Führungskanal 2 geführtes Stückgut sukzessive ausgehend von einer ersten Lage an der Eingangsöffnung 3 in eine zweite Lage an der Ausgangsöffnung 4 gedreht wird. In dem in Figur 1 zeichnerisch dargestellten Ausführungsbeispiel werden die zu wendenden Stückgüter dem Führungsblock 1 in einer horizontalen ersten Lage durch die Eingangsöffnung 3 in den Führungskanal 2 eingeführt und dort kontinuierlich gedreht, bis sie den Führungsblock 1 an der in Figur 1b gezeigten Ausgangsöffnung 4 in einer zweiten Lage verlassen, welche gegenüber der ersten Lage um 45° gedreht ist. In Durchlaufrichtung betrachtet, welche von der Eingangsöffnung 3 zur Ausgangsöffnung 4 verläuft, werden die Stückgüter beim Durchlauf durch den Führungskanal um 45° in der Uhrzeigerrichtung gedreht.

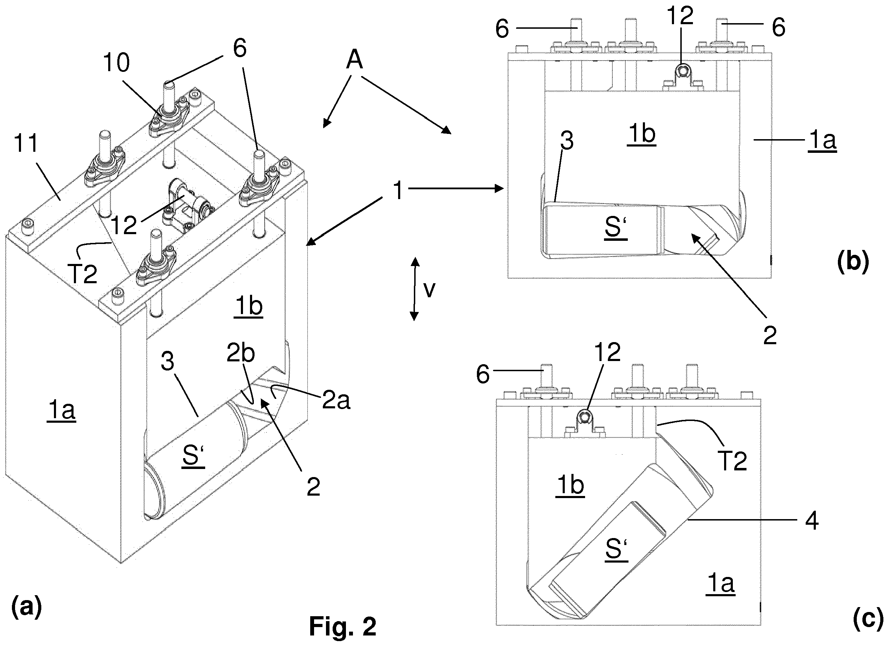

Zur Anpassung der Form und Größe des Führungskanals 2, einschließlich der Eingangsöffnung 3 und der Ausgangsöffnung 4, setzt sich der Führungsblock 1 aus einem stationären Blockteil 1a und einem beweglichen Blockteil 1b zusammen, wobei der bewegliche Blockteil 1b gegenüber dem stationären Blockteil 1a in einer vertikalen Richtung V zwischen einer Minimalstellung und einer Maximalstellung verschiebbar ist. Der stationäre Blockteil 1a des Führungsblock 1 ist hierfür an einem - in Figur 1 nicht gezeigten - stationären Rahmenteil 5 befestigt und der bewegliche Blockteil 1b ist gegenüber dem stationären Rahmenteil 5 und damit gegenüber dem stationären Blockteil 1a verschiebbar. In den Figuren 1a bis 1c ist der bewegliche Blockteil 1b in seiner Maximalstellung gezeigt, in welcher der Führungskanal 2 sowie die Eingangsöffnung 3 und die Ausgangsöffnung 4 jeweils eine maximale Größe aufweist. In den Figuren 2a bis 2c ist die erste Ausführungsform der erfindungsgemäßen Vorrichtung in ihrer Minimalstellung gezeigt, in welcher der Führungskanal 2 sowie die Eingangsöffnung 3 und die Ausgangsöffnung 4 jeweils eine minimale Größe aufweisen. In dieser Stellung ist die erste Ausführungsform der erfindungsgemäßen Vorrichtung für die Verarbeitung kleinerer Stückgüter S' angepasst. Die Vorrichtung A kann stufenlos zwischen der Minimalstellung der Figur 2 und der Maximalstellung der Figur 1 verstellt und dadurch an die jeweils zu verarbeitenden Stückgüter S angepasst werden.

Zum Verschieben des beweglichen Blockteils 1b ist dieser an Führungselementen 6 verschiebbar gelagert. In dem in Figur 1 gezeigten Ausführungsbeispiel sind die Führungselemente 6 durch Führungsstangen gebildet, welche an dem beweglichen Blockteil 1b befestigt sind und durch Führungsöffnungen 10 in Führungsschienen 11 durchgreifen. Die Führungsschienen 11 sind am stationären Blockteil 1a befestigt. Zweckmäßig ist der bewegliche Blockteil 1b an einen in Figur 1 nicht dargestellten Antrieb 7', beispielsweise einem motorischen, hydraulischen oder pneumatischen Antrieb, gekoppelt. Über den Antrieb 7' kann der bewegliche Blockteil 1b entlang der Führungselemente 6 gegenüber dem stationären Blockteil 1a verschoben werden. Zur Ankopplung des beweglichen Blockteils 1b an den Antrieb 7 ist ein Kopplungselement 12 am beweglichen Blockteil 1b befestigt.

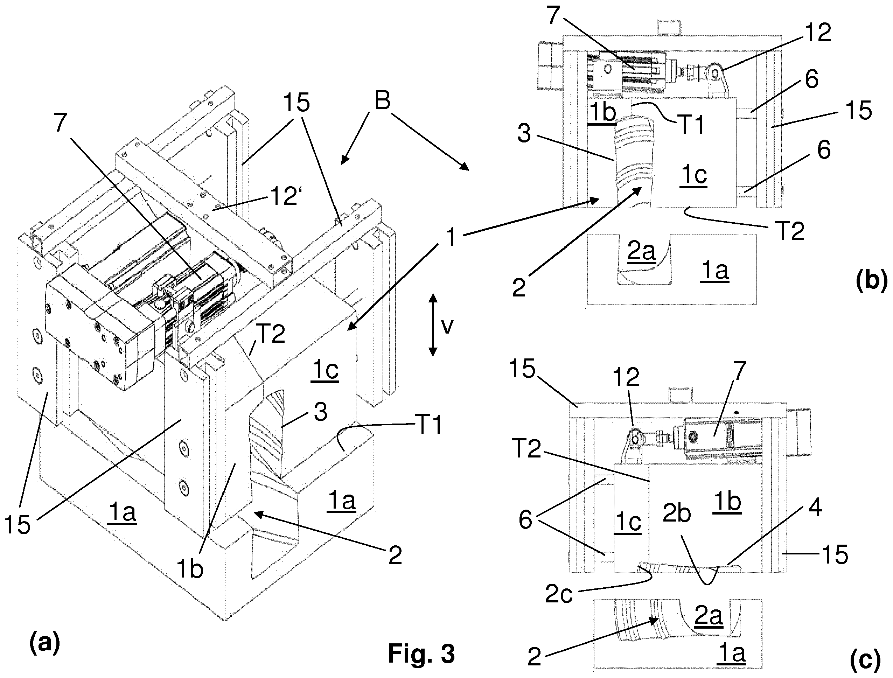

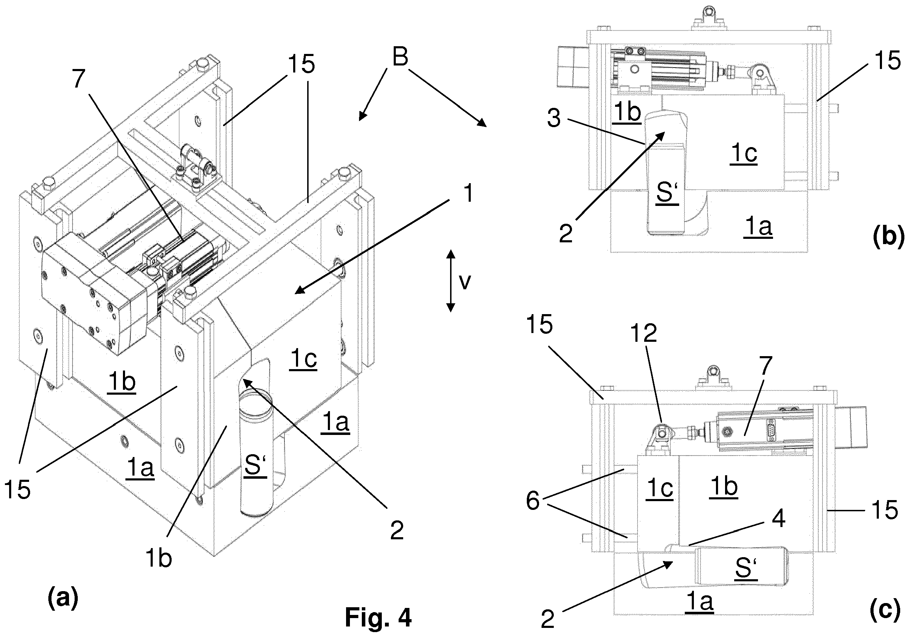

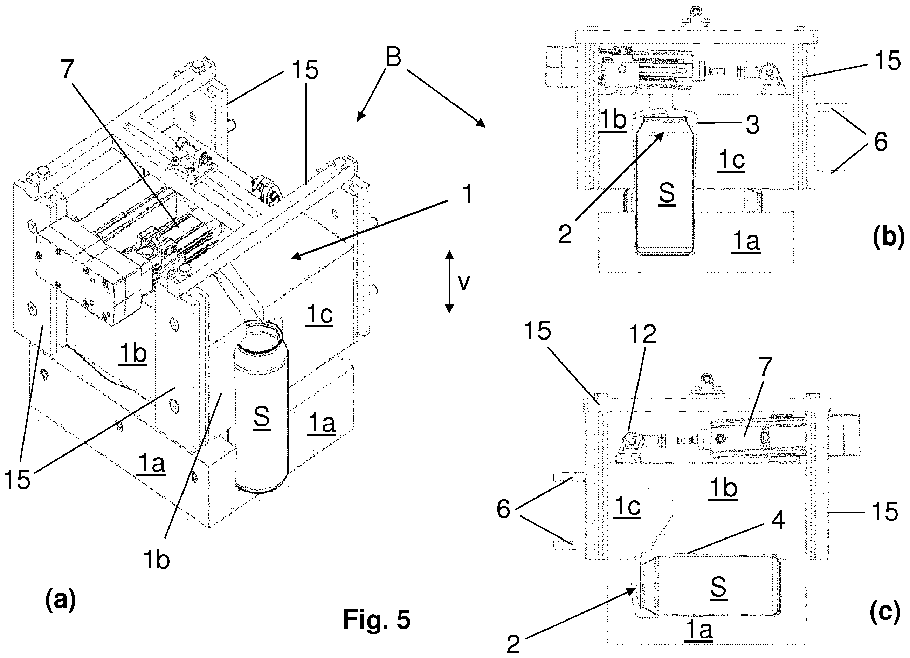

In den Figuren 3 bis 5 ist eine zweite Ausführungsform einer erfindungsgemäßen Vorrichtung B zum Wenden von seriell zugeführtem Stückgut gezeigt, wobei die Darstellung der Figur 3 die Vorrichtung ohne Stückgut und in einer Zwischenstellung zeigt und in den Figuren 4 und 5 eine Minimal- bzw. eine Maximalstellung der Vorrichtung mit eingelegtem Stückgut S' (kleinere Stückgüter) bzw. S (größere Stückgüter) gezeigt ist. Diese zweite Ausführungsform der erfindungsgemäßen Vorrichtung dient zum Drehen der Stückgüter S bzw. S' um einen vorgegebenen Drehwinkel von 90°. Wie in der ersten Ausführungsform der Figuren 1 und 2 umfasst die Vorrichtung B einen Führungsblock 1 mit einem darin ausgeformten Führungskanal 2, der eine Eingangsöffnung 3 und eine Ausgangsöffnung 4 aufweist. Die Stückgüter S, S' werden dem Führungsblock 1 in einer ersten, vertikalen Lage zugeführt und durch die Eingangsöffnung 3 in den Führungsblock 1 eingeführt, wo sie den Führungskanal 2 durchlaufen und ihn an der Ausgangsöffnung 4 in einer zweiten, horizontalen Lage verlassen.

Der Führungsblock 1 ist bei der zweiten Ausführungsform aus drei Blockteilen 1a, 1b und 1c zusammengesetzt, wobei es sich bei dem Blockteil 1a um einen stationären Blockteil und bei den Blockteilen 1b und 1c um bewegliche Blockteile handelt. Der stationäre Blockteil 1a ist an einem - in den Figuren 3 bis 5 nicht dargestellten - stationären Rahmenteil 5 befestigt. Die beiden beweglichen Blockteile 1b, 1c sind an einem gegenüber dem stationären Rahmenteil 5 beweglichen Rahmenteil 15 angeordnet. Der bewegliche Rahmenteil 15 ist dabei gegenüber dem stationären Rahmenteil 5 in einer vertikalen Richtung V verschiebbar.

Bei der zweiten Ausführungsform ist ein erster Teil 2a des Führungskanals 2 in dem stationären Blockteil 1a und ein zweiter Teil 2b sowie ein dritter Teil 2c des Führungskanals 2 sind in den beiden beweglichen Blockteilen 1b bzw. 1c ausgeformt. Der erste Teil 2a bildet zusammen mit zweiten Teil 2b sowie dem dritten Teil 2c den Führungskanal 2 aus.

Die beiden beweglichen Blockteile 1b, 1c sind an dem in vertikaler Richtung V beweglichen Rahmenteil 15 angeordnet, wobei der erste bewegliche Blockteil 1b an dem beweglichen Rahmenteil 15 fixiert ist und der zweite bewegliche Blockteil 1c verschiebbar in dem beweglichen Rahmenteil 15 angeordnet ist. Hierfür sind an dem beweglichen Rahmenteil 15 Führungselemente 6 befestigt. Entlang dieser Führungselemente 6 kann der zweite bewegliche Blockteil 1c gegenüber dem ersten beweglichen Blockteil 1b verschoben werden. Bei den Führungselementen 6 kann es sich beispielsweise um Führungsschienen oder - stangen handeln, welche am beweglichen Rahmenteil 15 befestigt sind. Zum Verschieben des zweiten beweglichen Blockteils 1c gegenüber dem ersten beweglichen Blockteil 1b ist der zweite bewegliche Blockteil 1c mit einem Antrieb 7 gekoppelt. Zweckmäßig handelt es sich bei dem Antrieb 7 um einen Schrittmotor, welcher über ein Kopplungselement 12 mit dem zweiten beweglichen Blockteil 1c verbunden ist.

Der Führungsblock 1 ist durch zwei Trennebenen T1, T2 in die drei Blockteile 1a, 1b, 1c unterteilt, wobei die Trennebenen durch den Führungskanal 2 verlaufen und die erste Trennebene T1 horizontal verläuft und die zweite Trennebene T2 senkrecht auf der ersten Trennebene T1 steht.

In den Figuren 3a bis 3c ist die Vorrichtung B gemäß der zweiten Ausführungsform der Erfindung in einer Zwischenstellung gezeigt, in welcher der zweite bewegliche Blockteil 1c am ersten beweglichen Blockteil 1b anliegt und der stationäre Blockteil 1a in einem maximalen vertikalen Abstand zu den beweglichen Blockteilen 1b, 1c steht. In den Figuren 4a bis 4c ist die Vorrichtung B in einer Minimalstellung gezeigt, in welcher sowohl der zweite bewegliche Blockteil 1c am ersten beweglichen Blockteil 1b anliegt als auch der stationäre Blockteil 1a an den beiden beweglichen Blockteilen 1b, 1c anliegt. In den Figuren 5a bis 5c ist die Vorrichtung B in ihrer Maximalstellung gezeigt, in welcher der zweite bewegliche Blockteil 1c in einem maximalen horizontalen Abstand zum ersten beweglichen Blockteil 1b und der stationäre Blockteil 1a in einem maximalen vertikalen Abstand zu den beweglichen Blockteilen 1b, 1c steht. In dieser Maximalstellung weist der Führungskanal 2 (einschl. der Eingangsöffnung 3 und der Ausgangsöffnung 4) eine maximale Größe (d.h. maximalen Durchmesser und maximale Höhe) auf. Die Vorrichtung B kann stufenlos und kontinuierlich zwischen der Minimalstellung der Figur 4 und der Maximalstellung der Figur 5 verstellt und dadurch an die zu verarbeitenden Stückgüter S angepasst werden.

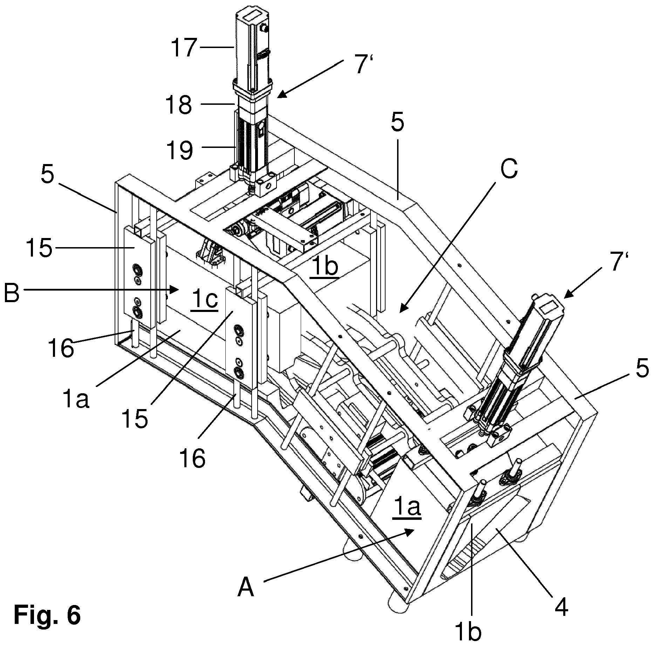

In Figur 6 ist eine Wendeeinrichtung zum Drehen von seriell zugeführtem Stückgut gezeigt, welche sich aus einer Vorrichtung A gemäß der ersten Ausführungsform (Figuren 1 und 2) und einer Vorrichtung B gemäß der zweiten Ausführungsform (Figuren 3 bis 5) zusammen setzt. Zwischen der ersten Vorrichtung A und der zweiten Vorrichtung B ist eine Transportstrecke C angeordnet, in der die Stückgüter auf einer Führung aufliegend linear transportiert werden. Die Transportstrecke C kann auch einen Transportantrieb aufweisen, wie z.B. ein Förderband, welches einen angetriebenen Riemen aufweist, auf dem ein Stückgut, welches die erste Vorrichtung A an ihrer Ausgangsöffnung 4 verlässt, zur Eingangsöffnung 3 der zweiten Vorrichtung B transportiert wird. Die Dreheinrichtung von Figur 6 weist einen stationären Rahmenteil 5 auf, an dem die erste Vorrichtung A und die zweite Vorrichtung B angeordnet sind. Dabei ist der stationäre Blockteil 1a der ersten Vorrichtung A an dem stationären Rahmenteil 5 befestigt. Der bewegliche Rahmenteil 15 der Vorrichtung B ist verschiebbar an dem stationären Rahmenteil 5 angeordnet. Hierfür sind Führungselemente 16, bspw. vertikal stehende Führungsstangen, am stationären Rahmenteil 5 befestigt und der bewegliche Rahmenteil 15 der Vorrichtung B ist an den Führungselementen 16 verschiebbar gelagert. Weiterhin sind Vertikalantriebe 7' vorgesehen, mit denen der bewegliche Blockteil 1b der Vorrichtung A und der bewegliche Rahmenteil 15 der Vorrichtung B in vertikaler Richtung V gegenüber dem stationären Blockteil 1a der jeweiligen Vorrichtungen A bzw. B verschiebbar sind. Bei diesen Vertikalantrieben 7' handelt es sich zweckmäßig um Schrittmotoren 17, welche über eine Kupplung 18 und einem Linearzylinder 19 über Kopplungselemente 12 mit dem beweglichen Blockteil 1b bzw. dem beweglichen Rahmenteil 15 verbunden sind.

Mit der Wendeeinrichtung von Figur 6 können Stückgüter nacheinander zuerst mittels der zweiten Vorrichtung B um 90° und anschließend mittels der ersten Vorrichtung A um 45° und somit um einen Gesamtdrehwinkel von 135° gedreht werden.

Die Erfindung ist nicht auf die hier zeichnerisch dargestellten und oben beschriebenen Ausführungsformen beschränkt. Insbesondere sind die vorgegebenen Drehwinkel der Vorrichtungen A, B nicht auf die hier beispielhaft angegebenen Werte von 45° bzw. 90° beschränkt. Je nach Länge des Führungskanals 2 kann jeder beliebige Drehwinkel realisiert werden. Weiterhin ist die Erfindung nicht auf die Unterteilung des Führungsblocks 1 in zwei oder drei Blockteile beschränkt, sondern es können noch weitere Unterteilungen vorgesehen sein. Durch weitere Unterteilungen des Führungsblocks in mehr als drei Blockteile lässt sich nicht nur eine Anpassung der Größe des Führungskanals an die Höhe und die Breite bzw. den Durchmesser der zu verarbeitenden Stückgüter S vornehmen, sondern auch an besondere Formen der Stückgüter.

## Patentansprüche

1. Vorrichtung zum Wenden von seriell zugeführtem Stückgut mit einem Führungsblock (1), in dem ein Führungskanal (2) mit einer Eingangsöffnung (3) und einer Ausgangsöffnung (4) ausgeformt ist, wobei die Stückgüter durch die Eingangsöffnung (3) in den Führungskanal (2) in einer ersten Lage eingeführt und unter Veränderung ihrer Lage durch den Führungskanal (2) geführt werden und diesen in einer zweiten Lage durch die Ausgangsöffnung (4) verlassen, wobei der Führungskanal (2) so geformt ist, dass die Stückgüter beim Durchführen durch den Führungskanal (2) aus ihrer ersten Lage kontinuierlich und über einen vorgegebenen Drehwinkel in die zweite Lage gedreht werden, wobei die Stückgüter in der ersten und der zweiten Lage unterschiedliche Orientierung aufweisen, und der Führungsblock (1) aus wenigstens zwei Blockteilen (1a, 1b) besteht, **dadurch gekennzeichnet, dass** die wenigstens zwei Blockteilen entlang von Trennebenen (T1, T2) voneinander getrennt sind, wobei die oder jede Trennebene (T1; T1; T2) durch den Führungskanal (2) verläuft und, dass die Blockteile (1a, 1b) gegeneinander verschiebbar sind.

2. Vorrichtung nach Anspruch 1, **dadurch gekennzeichnet, dass** der Führungsblock (1) aus einem stationären Blockteil (1a) und einem beweglichen Blockteil (1b) besteht.

3. Vorrichtung nach Anspruch 2, **dadurch gekennzeichnet, dass** der stationäre Blockteil (1a) an einem stationären Rahmenteil (5) befestigt und der bewegliche Blockteil (1b) über Führungselemente (6) an dem stationären Rahmenteil (5) gelagert und entlang dieser Führungselemente (6) gegenüber dem stationären Blockteil (1a) verschiebbar ist.

4. Vorrichtung nach Anspruch 2 oder 3, **dadurch gekennzeichnet, dass** der bewegliche Blockteil (1b) mit einem Antrieb (7, 7'), insbesondere einem motorischen, hydraulischen oder pneumatischen Antrieb, gekoppelt ist.

5. Vorrichtung nach einem der voranstehenden Ansprüche, **dadurch gekennzeichnet, dass** der (mittlere) Durchmesser und/oder die Höhe des Führungskanals (2) durch Verschieben wenigstens eines Blockteils (1a, 1b) veränderbar und insbesondere an die Größe des Stückguts anpassbar ist.

6. Vorrichtung nach einem der Ansprüche 2 bis 5, **dadurch gekennzeichnet, dass** der bewegliche Blockteil aus einem ersten Blockteil (1b) und einem zweiten Blockteil (1c) besteht, wobei der zweite Blockteil (1c) gegenüber dem ersten Blockteil (1b) insbesondere mittels eines Antrieb (7) verschiebbar ist.

7. Vorrichtung nach einem der Ansprüche 2 bis 6, **dadurch gekennzeichnet, dass** der bewegliche Blockteil (1b, 1c) in einem beweglichen Rahmenteil (15) angeordnet ist, welcher gegenüber dem stationären Rahmenteil (5) verschiebbar ist.

8. Vorrichtung nach Anspruch 7, **dadurch gekennzeichnet, dass** der bewegliche Rahmenteil (15) gegenüber dem stationären Rahmenteil (5) in einer vertikalen Richtung und/oder der zweite Blockteil (1c) in dem beweglichen Rahmenteil (15) gegenüber dem ersten Blockteil (1b) entlang einer horizontalen Richtung verschiebbar ist.

9. Vorrichtung nach einem der voranstehenden Ansprüche, wobei die Stückgüter entlang einer Transportrichtung (T) durch den Führungskanal (2) geführt werden und die Blockteile (1a, 1b, 1c) in einer zumindest im Wesentlichen senkrecht zur Transportrichtung (T) stehenden Richtung gegeneinander verschiebbar sind.

10. Vorrichtung nach einem der voranstehenden Ansprüche, wobei der (mittlere) Durchmesser und/oder die Höhe des Führungskanals (2) durch Verschieben wenigstens eines Blockteils (1a, 1b, 1c) veränderbar und insbesondere an die Form und die Größe des Stückguts anpassbar ist.

## Claims

1. Device for turning serially supplied piece goods with a guide block (1), in which a guide channel (2) with an input opening (3) and an output opening (4) is formed, wherein the piece goods are introduced into the guide channel (2) in a first position through the input opening (3) and while changing its position are guided through the guide channel (2) and in a second position leave the latter through the output opening (4), wherein the guide channel (2) is shaped so that the piece goods, when taken through the guide channel (2), are rotated from their first position continuously and over a preset angle of rotation into the second position, wherein the piece goods have different orientation in the first and the second position, and the guide block (1) consists of at least two block parts (1a, 1b), **characterised in that** the at least two block parts are separated from one another along separating planes (T1, T2), wherein the or each separating plane (T1; T1: T2) runs through the guide channel (2) and **in that** the block parts (1a, 1b) are displaceable with respect to one another.

2. Device according to claim 1, **characterised in that** the guide block (1) consists of a stationary block part (1a) and a movable block part (1b).

3. Device according to claim 2, **characterised in that** the stationary block part (1a) is attached to a stationary frame part (5) and the movable block part (1b) is mounted on the stationary frame part (5) via guide elements (6) and are displaceable with respect to the stationary block part (1a) along these guide elements (6).

4. Device according to claim 2 or 3, **characterised in that** the movable block part (1b) is coupled to a drive (7, 7'), in particular a motor, hydraulic or pneumatic drive.

5. Device according to one of the preceding claims, **characterised in that** the (mean) diameter and/or the height of the guide channel (2) can be changed by displacing at least one block part (1a, 1b) and in particular can be adapted to the size of the piece goods.

6. Device according to one of claims 2 to 5, **characterised in that** the movable block part consists of a first block part (1b) and a second block part (1c), wherein the second block part (1c) is displaceable with respect to the first block part (1b) in particular by means of a drive (7).

7. Device according to one of claims 2 to 6, **characterised in that** the movable block part (1b, 1c) is arranged in a movable frame part (15) which is displaceable with respect to the stationary frame part (5).

8. Device according to claim 7, **characterised in that** the movable frame part (15) is displaceable with respect to the stationary frame part (5) in a vertical direction and/or the second block part (1c) is displaceable in the movable frame part (15) with respect to the first block part (1b) along a horizontal direction.

9. Device according to one of the preceding claims, wherein the piece goods are guided through the guide channel (2) along a transport direction (T) and the block parts (1a, 1b, 1c) are displaceable with respect to one another in a direction standing at least substantially vertically to the transport direction (T).

10. Device according to one of the preceding claims, wherein the (mean) diameter and/or the height of the guide channel (2) is changeable by displacing at least one block part (1a, 1b, 1c) and in particular is adaptable to the shape and the size of the piece goods.

## Revendications

1. Dispositif de retournement de marchandises au détail transportées en série avec un bloc de guidage (1), dans lequel un canal de guidage (2) est formé avec une ouverture d'entrée (3) et une ouverture de sortie (4), dans lequel les marchandises au détail sont introduites par l'ouverture d'entrée (3) dans le canal de guidage (2) dans une première position et guidées à travers le canal de guidage (2) par modification de leur position et quittent celui-ci dans une deuxième position par l'ouverture de sortie (4), dans lequel le canal de guidage (2) est formé de sorte que les marchandises au détail sont tournées lors du guidage à travers le canal de guidage (2) de leur première position en continu et via un angle de rotation prédéfini à la deuxième position, dans lequel les marchandises au détail présentent une orientation différente dans la première et la deuxième position, et le bloc de guidage (1) se compose d'au moins deux parties de bloc (1a, 1b), **caractérisé en ce que** les au moins deux parties de bloc sont séparées l'une de l'autre le long de plans de séparation (T1, T2), dans lequel le ou chaque plan de séparation (T1 ; T1 ; T2) s'étend à travers le canal de guidage (2) et que les parties de bloc (1a, 1b) peuvent coulisser l'une par rapport à l'autre.

2. Dispositif selon la revendication 1, **caractérisé en ce que** le bloc de guidage (1) se compose d'une partie de bloc stationnaire (1a) et d'une partie de bloc mobile (1b).

3. Dispositif selon la revendication 2, **caractérisé en ce que** la partie de bloc stationnaire (1a) est fixée au niveau d'une partie de cadre stationnaire (5) et la partie de bloc mobile (1b) est logée par le biais d'éléments de guidage (6) au niveau de la partie de cadre stationnaire (5) et peut coulisser le long de ces éléments de guidage (6) par rapport à la partie de bloc stationnaire (1a).

4. Dispositif selon la revendication 2 ou 3, **caractérisé en ce que** la partie de bloc mobile (1b) est couplée avec un entraînement (7, 7'), en particulier un entraînement motorisé, hydraulique ou pneumatique.

5. Dispositif selon l'une quelconque des revendications précédentes, **caractérisé en ce que** le diamètre (moyen) et/ou la hauteur du canal de guidage (2) est modifiable par coulissement d'au moins une partie de bloc (1a, 1b) et en particulier adaptable à la taille des marchandises au détail.

6. Dispositif selon l'une quelconque des revendications 2 à 5, **caractérisé en ce que** la partie de bloc mobile se compose d'une première partie de bloc (1b) et d'une deuxième partie de bloc (1c), dans lequel la deuxième partie de bloc (1c) peut coulisser par rapport à la première partie de bloc (1b) en particulier au moyen d'un entraînement (7).

7. Dispositif selon l'une quelconque des revendications 2 à 6, **caractérisé en ce que** la partie de bloc mobile (1b, 1c) est agencée dans une partie de cadre mobile (15), laquelle peut coulisser par rapport à la partie de cadre stationnaire (5).

8. Dispositif selon la revendication 7, **caractérisé en ce que** la partie de cadre mobile (15) peut coulisser par rapport à la partie de cadre stationnaire (5) dans une direction verticale et/ou la deuxième partie de bloc (1c) dans la partie de cadre mobile (15) peut coulisser par rapport à la première partie de bloc (1b) le long d'une direction horizontale.

9. Dispositif selon l'une quelconque des revendications précédentes, dans lequel les marchandises au détail sont guidées le long d'une direction de transport (T) par le canal de guidage (2) et les parties de bloc (1a, 1b, 1c) peuvent coulisser l'une par rapport à l'autre dans une direction au moins sensiblement perpendiculaire à la direction de transport (T).

10. Dispositif selon l'une quelconque des revendications précédentes, dans lequel le diamètre (moyen) et/ou la hauteur du canal de guidage (2) est modifiable par coulissement d'au moins une partie de bloc (1a, 1b, 1c) et en particulier adaptable à la forme et à la taille des marchandises au détail.
